# EUROPÄISCHE PATENTSCHRIFT

(11) **EP 2 206 638 B1**
(45) Veröffentlichungstag und Bekanntmachung des Hinweises auf die Patenterteilung: **29.08.2012**
(21) Anmeldenummer: 09014148.2
(22) Anmeldetag: 12.11.2009
(51) Int. Cl.: B62D 25/08, B62D 33/06, B60R 3/02

(54) **Verfahren zum Aufbau eines Vorderwagens eines Lastkraftwagens mit Fahrerhaus und Vorderwagen eines Lastkraftwagens**
Method for assembling a front end of a truck with driver cab and front end of a truck
Procédé de montage d'une partie avant d'un camion doté d'une cabine conducteur et partie avant d'un camion

(30) Priorität: 09.01.2009 DE 102009004154
(43) Veröffentlichungstag der Anmeldung: 14.07.2010
(73) Patentinhaber: MAN Truck & Bus AG, 80995 München (DE)
(72) Erfinder: Kneifel, Eberhard, 89250 Senden (DE); Mederle, Günther, 85051 Ingolstadt (DE); Örke, Philipp, 81379 München (DE)

(56) Entgegenhaltungen:
- EP-A2- 0 247 295
- EP-A2- 2 145 815
- WO-A1-02/070327
- WO-A1-2004/037629
- WO-A1-2009/004221

## Beschreibung

Die Erfindung betrifft ein Verfahren zum Aufbau eines Vorderwagens eines Lastkraftwagens mit einem Fahrerhaus nach dem Oberbegriff des Anspruchs 1 sowie einen Vorderwagen eines Lastkraftwagens mit Fahrerhaus nach dem Oberbegriff des Anspruchs 8.

Ein gattungsgemäßes Verfahren zum Aufbau eines Vorderwagens eines Lastkraftwagens mit einem Fahrerhaus ist aus DE 602 20 252 T2 bekannt. Hier ist über einen vorderen Bereich von Längsträgern eines Fahrgestellrahmens die Karosserie mit einem Fahrerhaus angeordnet, wobei die Längsträger eine Radaufhängung mit Vorderrädern sowie in allgemein bekannter Anordnung eine Brennkraftmaschine mit frontseitig zugeordnetem Kühler tragen. Zur Montagevereinfachung ist hier ein vormontiertes Frontmodul vorgesehen, welches aus einem frontseitig durchgehenden Stoßfänger mit jeweils seitlich aufgesetzten Scheinwerfereinheiten und Fußtritten besteht und welches rahmenfest montiert wird. Über den weiteren Aufbau der unteren Karosserieseitenbereiche ist explizit nichts ausgesagt, so dass von einem konventionellen üblichen mehrteiligen Aufbau auszugehen ist.

Weiter ist ein wabenförmig strukturiertes Stützteil insbesondere aus Kunststoff im vorderen Kotflügelbereich eines Personenkraftwagens aus DE 697 09 609 T2 bekannt, dessen Struktur zur Aufnahme und als Halter für Einbauteile geformt ist und das insbesondere Halterungen für eine Motorhaube umfasst. Das Stützteil ist an Längsträgern und an der Stirnwand der nach hinten anschließenden Fahrgastzelle befestigt.

Die EP 2 145 815 A2 zeigt rechtsseitige und linksseitige Karosserie-Seitenmodule, die jeweils einen einstückigen, durch Formgießen hergestellten Träger aufweisen, an dem ein sogenanntes Kotflügelteil durch zum Beispiel Schrauben oder Klipsen befestigt werden kann. Der Bauteilverbund aus Träger und Kotflügelteil kann vormontiert und somit im Rahmen der Endmontage als Ganzes im Bereich unterhalb einer Fahrerhaustür montiert werden.

Weiter zeigt die WO 2009/004221 A1 einen Stoßfängeraufbau, der zwei seitliche, in Richtung zu einer Seitenwand hin abgebogene Stoßfängerteile aufweist, die durch eine mittige Traverse des Stoßfängers verbunden sind.

Und schließlich zeigt die WO 2004/037629 A1 ein Seitenwandmodul, das aus einem Befestigungsträger aus Kunststoff, einer selbsttragenden Seitenwand aus Kunststoff, einer Radhausverkleidung und mehreren zusätzlichen Versteifungsrippen ausgebildet ist. Der Befestigungsträger ist mit Verrippungen versehen und hat eine längliche Form, die sich in Fahrzeuglängsrichtung und annähernd über die gesamte Länge des Seitenwandmoduls erstrecken. Dieses Seitenwandmodul kann vollständig vormontiert werden, bevor es am Fahrzeug montiert wird. Zwei derartige Seitenwandmodule können dann zusammen mit einem Frontendmodul zu einer Vormontageeinheit verbunden werden.

Aufgabe der Erfindung ist es, ein gattungsgemäßes Verfahren zum Aufbau eines Vorderwagens eines Lastkraftwagens mit Fahrerhaus dahingehend zu verbessern, dass der Gesamtaufwand für die Herstellung und Montage geringer wird und dadurch eine Kostenreduktion möglich ist. Eine weitere Aufgabe der Erfindung ist es, einen entsprechend einem solchen Verfahren aufgebauten Vorderwagen eines Lastkraftwagens mit Fahrerhaus vorzuschlagen.

Die Aufgabe der Erfindung wird hinsichtlich des Verfahrens mit den Merkmalen des Anspruchs 1 gelöst.

Gemäß Anspruch 1 werden rechtsseitige und linksseitige Karosserie-Seitenmodule als Bauteile der Karosserie komplett vorgefertigt, die sich im montierten Zustand von der Karosseriefront bis zur Hinterkante des Fahrerhauses erstrecken und dessen unteren Bereich mit Außenhaut unterhalb der Ebene einer Fahrerhaustür-Unterkante bilden. Dabei sind jeweils in einem Karosserie-Seitenmodul wenigstens ein Funktionsteil eingebaut und zumindest teilweise der Kotflügel und das Radhaus integriert. Ein so komplett vormontiertes Karosserie-Seitenmodul wird dann als Bestandteil der Karosserie rahmenfest oder fahrerhausfest vorzugsweise in einer Montagelinie an einem für eine solche Montage vorbereiteten Karosserie montiert. Weiter erfindungsgemäß werden die Karosserie-Seitenmodule so dimensioniert und montiert, dass sie jeweils seitlich an einen frontseitigen, längsmittig angeordneten Kühler anschließen, welcher zudem so dimensioniert und montiert ist, dass er bis zu einem Unterfahrschutz herunterreicht, wobei der Kühler und der Unterfahrschutz rahmenfest montiert werden. Bei einer solchen Anordnung kann eine sonst übliche Stoßstange vorteilhaft mit entsprechender Kosten- und Gewichtsreduktion entfallen und der Kühler kann lediglich durch ein gegebenenfalls optisch gestaltetes Kühlergitter abgedeckt werden.

Damit kann ein Karosserie-Seitenmodul unabhängig von einer Bandmontage beim Fahrzeughersteller, insbesondere auch bei einem Zulieferbetrieb mit maximaler Funktions-und Bauteilintegration komplett hergestellt werden und unabhängig von der Vorfertigung des übrigen Karosserieaufbaus später bei der Bandmontage als Gesamtbauteil einfach montiert werden. Bei einer herkömmlichen Montage werden dagegen im unteren Karosserieseitenbereich eine Mehrzahl von Einzelbauteilen in Verbindung mit der Bandmontage, wie Einstiege, Kotflügel, Innenkotflügel, Spritzschutzeinrichtungen, Scheinwerfer und so weiter in unterschiedlichen Kombinationen sowohl rahmenfest als auch fahrerhausfest montiert, was einen erheblichen Montageaufwand bei der Bandmontage bedingt. Durch die Verwendung der erfindungsgemäßen rechtsseitigen und linksseitig, vormontierten Karosserie-Seitenmodule ergibt sich eine vereinfachte Bandmontage mit einer Taktzeitverkürzung, was gegebenenfalls in Verbindung mit einer Verringerung der Fertigungstiefe durch eine externe Fertigung zu einer Kostenreduktion führt. Zudem sind durch Standardisierungen hinsichtlich der Karosserie-Seitenmodule Variantenreduktionen, Gewichtsreduktionen sowie Vorteile hinsichtlich der Spaltmaß- und Toleranzproblematik möglich, was wiederum zu Kostenreduktionen führt. Bei einer entsprechenden Formoptimierung ist auch eine CW-Wertverbesserung möglich. Weiter ist durch eine hohe Funktions- und Bauteilintegration eine verbesserte Bauraumausnützung erreichbar.

Bei der Vorfertigung der Karosserie-Seitenmodule können eine Vielzahl unterschiedlicher Funktionsteile, wie Scheinwerfer und/oder Scheinwerferverkleidungen und/oder Innenkotflügel und/oder Spritzschutzeinrichtungen und/oder Einstiege und/oder elektrische Einrichtungen und/oder Behälter und/oder Luftführungen und/oder Verbindungshalterungen eingebaut oder angeformt werden je nach den Anforderungen und Gegebenheiten eines individuellen Lastkraftwagens.

Ein wesentlicher Vorteil des Aufbauverfahrens wird erreicht, wenn das Karosserie-Seitenmodul mit einer Tragstruktur und einer fahrzeugaußenseitigen Außenhaut als Vormontageteil hergestellt wird. Dabei bildet die steife Tragstruktur im montierten Zustand den jeweils unteren seitlichen Karosseriebauraum mit der rahmenfesten oder fahrerhausfesten Anbindung, wobei in der Tragstruktur die Funktionsteile aufgenommen und/oder integriert sind. Eine solche Tragstruktur ist mit der erforderlichen Steifigkeit kosten-und gewichtsgünstig herstellbar und definiert vorteilhaft den Bauraum für eine einfache Aufnahme und Halterung von Funktionsteilen.
Zweckmäßig ist die Tragstruktur als Gitterrahmen hergestellt und in seiner Gestalt dem unteren seitlichen Karosseriebereich angepasst und besteht dazu aus Längsrahmenteilen, Vertikalrahmenteilen und Querrahmenteilen sowie aus Bogenrahmenteilen in einem vorderen abgerundeten Eckbereich sowie im Bereich um das jeweilige Radhaus.

Die Tragstruktur, insbesondere als Gitterrahmen wird zweckmäßig aus hochfestem Werkstoff vorzugsweise als Aludruckguss oder Faserverbundwerkstoff mit an sich bekannten Verfahren hergestellt.

Auch die Außenhaut wird in Verbindung mit der Vorfertigung an der Tragstruktur, insbesondere am Gitterrahmen angebracht und besteht vorzugsweise aus korrosionsbeständigem Kunststoff, insbesondere aus thermoplastischem Kunststoff. Dabei sind einteilige oder mehrteilige Außenhautelemente möglich.

In an sich bekannter Weise kann das Fahrerhaus um eine Querachse klappbar ausgeführt werden. Im Falle von fahrerhausfest montierten Karosserie-Seitenmodulen werden diese beim Kippen des Fahrerhauses mitverschwenkt. Im Falle von rahmenfest montierten Karosserie-Seitenmodulen verbleiben diese beim Kippen des Fahrerhauses rahmenfest.

Die Aufgabe wird hinsichtlich eines Vorderwagens eines Lastkraftwagens mit Fahrerhaus mit den Merkmalen des Anspruchs 8 gelöst, in dem ein solcher Vorderwagen nach einem der vorstehenden Verfahren hergestellt ist.

Die Erfindung wird weiter anhand einer Zeichnung erläutert.

Es zeigen:
- Fig. 1: eine perspektivische Darstellung eines dreidimensionalen Gitterrahmens eines linksseiten Karosserie-Seitenmoduls sowie dessen Lage in einer strichliert angedeuteten Karosserie, und
- Fig. 2: eine modifizierte Ausführung eines Karosserie-Seitenmoduls nach Fig. 1 komplettiert mit einer Außenhaut und einem Einstieg.

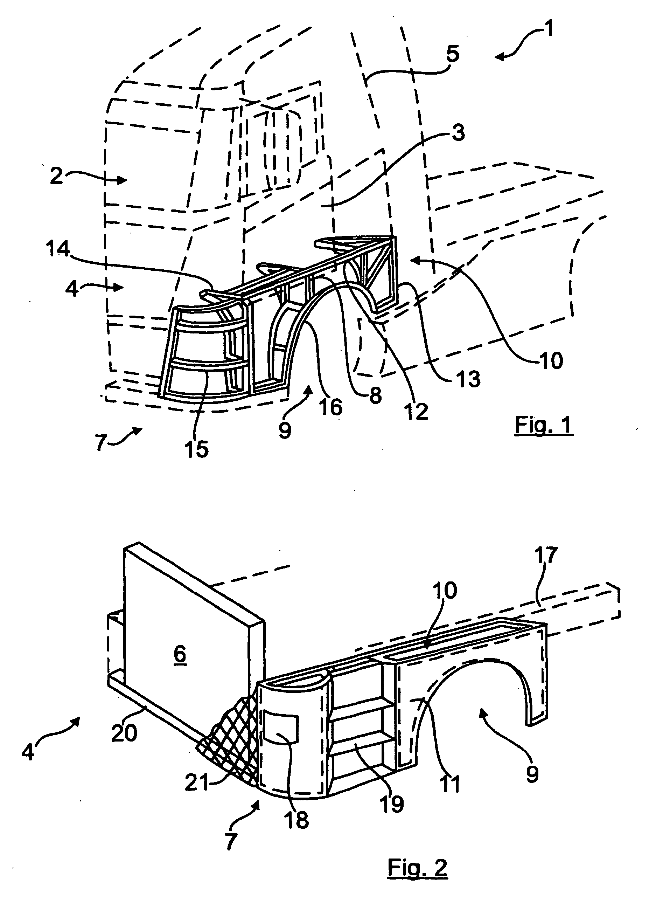

In Fig. 1 ist strichliert und schematisch die linke Seitenhälfte einer Karosserie 1 dargestellt mit einem Fahrerhaus 2, mit einer linken Fahrerhaustür 3, mit einer Karosseriefront 4 und mit einer Hinterkante 5 des Fahrerhauses 2. Im Bereich der Karosseriefront 4 ist längsmittig ein Kühler 6 angeordnet (siehe Fig. 2), an den sich ein linksseitiges Karosserie-Seitenmodul 7 unter Ausbildung eines gebogenen Fahrzeugeckbereichs anschließt und sich im montierten Zustand von der Querebene der Karosseriefront 4 bis zur Hinterkante 5 des Fahrerhauses 2 erstreckt. Das Karosserie-Seitenmodul 7 bildet dabei als komplett vorgefertigtes Bauteil der Karosserie 1 dessen unteren Bereich unterhalb der Horizontalebene durch die Fahrerhaustür-Unterkante 8.

Unter der Karosserie 1 sind in an sich bekannter Weise (nicht dargestellt), Längsträger und Querträger eines Fahrgestellrahmens, eine Brennkraftmaschine und eine Radhaufhängung mit den Vorderrädern angeordnet, wobei für das linksseitige Vorderrad ein entsprechendes Radhaus 9 im Karosserie-Seitenmodul 7 vorgesehen ist.

In Fig. 1 ist mit durchgezogenen Linien die Tragstruktur des Karosserie-Seitenmoduls 7 als Gitterrahmen 10 gezeigt sowie dessen Größe und Lage an der Karosserie 1. Das Karosserie-Seitenmodul 7 wird komplett vorgefertigt, wobei der Gitterrahmen 10 mit einer Außenhaut 11 beplankt und mit Funktionsteilen bestückt wird. Das vorgefertigte Bauteil wird dann rahmenfest oder fahrerhausfest zur Komplettierung der Karosserie 1 montiert.

Ersichtlich besteht der Gitterrahmen 10 aus einer dreidimensionalen steifen Tragstruktur mit Längsrahmenteilen 12, Vertikalrahmenteilen 13 und Querrahmenteilen 14 sowie mit Bogenrahmenteilen 15 im vorderen abgerundeten Eckbereich und Bogenrahmenteilen 16 um das Radhaus 9. Der Gitterrahmen 10 ist aus hochfestem Werkstoff, vorzugsweise Aludruckguss oder Faserverbundwerkstoff, hergestellt.

In Fig. 2 ist schematisch ein gegenüber Fig. 1 etwas modifiziertes Karosserie-Seitenmodul 7 komplett vormontiert und bereit zur Montage dargestellt, hier für eine rahmenfeste Montage beispielsweise an einem schematisch angedeuteten Längsträger 17 eines Fahrgestellrahmens.

Der Gitterrahmen 10 ist dabei mit der Außenhaut 11 vorzugsweise aus thermoplastischem Kunststoff versehen, wobei in Verbindung mit der Vorfertigung zudem Funktionsteile eingebaut und integriert sind, wobei in Fig. 2 beispielsweise ein Scheinwerfer 18 und ein treppenförmiger Einstieg 19 gezeigt sind.

Aus Fig. 2 ist ersichtlich, dass der Kühler 6 längsmittig angeordnet ist dergestalt, dass er bis zu einem Unterfahrschutz 20 herunterreicht, wobei der Kühler 6 und der Unterfahrschutz 20 rahmenfest montiert werden. Die Karosserie-Seitenmodule 7 schließen sich dann jeweils seitlich an den Kühler an, der dann durch ein Kühlergitter 21 abdeckbar ist, wobei vorteilhaft eine übliche Stoßstange entfällt.

Bei der in Fig. 1 und Fig. 2 angegebenen rahmenfesten Montage der Karosserie-Seitenmodule 7 liegt das Fahrerhaus 2 oberhalb der Karosserie-Seitenmodule 7 und kann um eine vordere Querachse klappbar ausgeführt sein.

## Patentansprüche

1. Verfahren zum Aufbau eines Vorderwagens eines Lastkraftwagens mit Fahrerhaus,
- mit Längsträgern (17) und/oder Querträgern eines Fahrgestellrahmens, die eine Brennkraftmaschine mit frontseitig zugeordnetem Kühler sowie eine Radaufhängung mit den Vorderrädern tragen, über denen die Karosserie (1) mit einem Fahrerhaus (2) angeordnet ist,
**dadurch gekennzeichnet,**
**dass** rechtsseitige und linksseitige Karosserie-Seitenmodule (7) als Bauteile der Karosserie (1) komplett vorgefertigt werden, die sich im montierten Zustand von der Karosseriefront (4) bis zur Hinterkante (5) des Fahrerhauses (2) erstrecken und die den unteren Bereich des Fahrerhauses (2) mit der Außenhaut (11) unterhalb der Ebene einer Fahrerhaustür-Unterkante (8) bilden, wobei jeweils im Karosserie-Seitenmodul (7) wenigstens ein Funktionsteil (18, 19) eingebaut ist und zumindest teilweise der Kotflügel und das Radhaus (9) integriert sind,
**dass** das vormontierte Karosserie-Seitenmodul (7) rahmenfest oder fahrerhausfest zur Komplettierung der Karosserie (1) montiert wird,
**dass** die Karosserie-Seitenmodule (7) so dimensioniert und montiert werden, dass sie jeweils seitlich an einen frontseitigen Kühler (6) anschließen, der so dimensioniert und montiert wird, dass er bis zu einem Unterfahrschutz (20) herunterreicht, wobei der Kühler (6) und der Unterfahrschutz (20) rahmenfest montiert werden.

2. Verfahren nach Anspruch 1, **dadurch gekennzeichnet, dass** als Funktionsteile bei der Vorfertigung der Karosserie-Seitenmodule (7) Scheinwerfer (18) und/oder Scheinwerferverkleidungen und/oder Innenkotflügel und/oder Spritzschutzeinrichtungen und/oder Einstiege (19) und/oder elektrische Einrichtungen und/oder Behälter und/oder Luftführungen und/oder Verbindungshalterungen eingebaut und montiert werden und/oder angeformt sind.

3. Verfahren nach Anspruch 1 oder 2, **dadurch gekennzeichnet, dass** das Karosserie-Seitenmodul (7) mit einer steifen Tragstruktur (10) und einer fahrzeugaußenseitigen Außenhaut (11) hergestellt wird, wobei die Tragstruktur (10) im montierten Zustand den jeweils unteren seitlichen Karosseriebauraum bildet mit der rahmenfesten oder fahrerhausfesten Anbindung und in der Tragstruktur (10) die Funktionsteile (18, 19, 9) aufgenommen und/oder integriert werden.

4. Verfahren nach Anspruch 3, **dadurch gekennzeichnet, dass** die Tragstruktur als Gitterrahmen (10) mit Längsrahmenteilen (12), Vertikalrahmenteilen (13) und Querrahmenteilen (14) sowie mit Bogenrahmenteilen (15) in einem vorderen abgerundeten Eckbereich sowie Bogenrahmenteilen (16) im Bereich um das jeweilige Radhaus (9) hergestellt wird.

5. Verfahren nach Anspruch 3 oder 4, **dadurch gekennzeichnet, dass** die Tragstruktur, insbesondere der Gitterrahmen (10) aus hochfestem Werkstoff, vorzugsweise Aludruckguss oder Faserverbundwerkstoff hergestellt wird.

6. Verfahren nach einem der Ansprüche 3 bis 5, **dadurch gekennzeichnet, dass** die Außenhaut (11) der Tragstruktur, insbesondere des Gitterrahmens (10) aus Kunststoff, vorzugsweise aus thermoplastischem Kunststoff hergestellt wird und einteilig oder mehrteilig ausgeführt wird.

7. Verfahren nach einem der Ansprüche 1 bis 6, **dadurch gekennzeichnet, dass** das Fahrerhaus (2) um eine Querachse klappbar ausgeführt wird, wobei im Falle von fahrerhausfest montierten Karosserie-Seitenmodulen diese beim Kippen des Fahrerhauses (2) mitverschwenkt werden und im Falle von rahmenfest montierten Karosserie-Seitenmodulen (7) diese beim Kippen des Fahrerhauses (2) rahmenfest verbleiben.

8. Vorderwagen eines Lastkraftwagens mit Fahrerhaus,
- mit Längsträgern (17) und/oder Querträgern eines Fahrgestellrahmens, die eine Brennkraftmaschine mit frontseitig zugeordnetem Kühler sowie eine Radaufhängung mit den Vorderrädern tragen, über denen die Karosserie (1) mit einem Fahrerhaus (2) angeordnet ist,
**dadurch gekennzeichnet,**
**dass** rechtsseitige und linksseitige Karosserie-Seitenmodule (7) als Bauteile der Karosserie (1) komplett vorgefertigt sind, sich im montierten Zustand von der Karosseriefront (4) bis zur Hinterkante (5) des Fahrerhauses (2) erstrecken und den unteren Bereich des Fahrerhauses (2) mit der Außenhaut (11) unterhalb der Ebene einer Fahrerhaustür-Unterkante (8) bilden, wobei jeweils im Karosserie-Seitenmodul (7) wenigstens ein Funktionsteil (18, 19) eingebaut ist und zumindest teilweise der Kotflügel und das Radhaus (9) integriert sind,
**dass** das vormontierte Karosserie-Seitenmodul (7) rahmenfest oder fahrerhausfest zur Komplettierung der Karosserie (1) montiert ist,
**dass** die Karosserie-Seitenmodule (7) so dimensioniert und montiert sind, dass sie jeweils seitlich an einen frontseitigen Kühler (6) anschließen, der so dimensioniert und montiert ist, dass er bis zu einem Unterfahrschutz (20) herunterreicht, wobei der Kühler (6) und der Unterfahrschutz (20) rahmenfest montiert sind.

9. Vorderwagen nach Anspruch 8, **dadurch gekennzeichnet, dass** als Funktionsteile bei der Vorfertigung der Karosserie-Seitenmodule (7) Scheinwerfer (18) und/oder Scheinwerferverkleidungen und/oder Innenkotflügel und/oder Spritzschutzeinrichtungen und/oder Einstiege (19) und/oder elektrischen Einrichtungen und/oder Behälter und/oder Luftführungen und/oder Verbindungshalterungen eingebaut und montiert sind und/oder angeformt sind.

10. Vorderwagen nach Anspruch 8 oder 9, **dadurch gekennzeichnet, dass** das Karosserie-Seitenmodul (7) mit einer steifen Tragstruktur (10) und einer fahrzeugaußenseitigen Außenhaut (11) hergestellt ist, wobei die Tragstruktur (10) im montierten Zustand den jeweils unteren seitlichen Karosseriebauraum bilden mit der rahmenfesten oder fahrerhausfesten Anbindung und in der Tragstruktur (10) die Funktionsteile (18, 19, 9) aufgenommen und/oder integriert sind.

11. Vorderwagen nach Anspruch 10, **dadurch gekennzeichnet, dass** die Tragstruktur als Gitterrahmen (10) mit Längsrahmenteilen (12), Vertikalrahmenteile (13) und Querrahmenteilen (14) sowie mit Bogenrahmenteilen (15) in einem vorderen abgerundeten Eckbereich sowie Bogenrahmenteilen (16) im Bereich um das jeweilige Radhaus (9) hergestellt ist.

12. Vorderwagen nach Anspruch 10 oder 11, **dadurch gekennzeichnet, dass** die Tragstruktur, insbesondere der Gitterrahmen (10) aus hochfestem Werkstoff, vorzugsweise Aludruckguss oder Faserverbundwerkstoff hergestellt ist.

13. Vorderwagen nach einem der Ansprüche 10 bis 12, **dadurch gekennzeichnet, dass** die Außenhaut (11) der Tragstruktur, insbesondere des Gitterrahmens (10) aus Kunststoff, vorzugsweise aus thermoplastischem Kunststoff hergestellt ist und einteilig oder mehrteilig ausgeführt ist.

## Claims

1. Method for assembling a front end of a lorry with a driver cab,
- with longitudinal members (17) and/or crossmembers of a chassis frame, which support an internal combustion engine with a radiator assigned on the front side and a wheel suspension with the front wheels, above which the body (1) with a driver cab (2) is arranged,
**characterized**
**in that** body side modules (7) on the right side and left side are completely premanufactured as components of the body (1), which, in the fitted state, extend from the front of the body (4) as far as the rear edge (5) of the driver cab (2) and form the lower region of the driver cab (2) with the outer skin (11) below the plane of a lower edge (8) of a driver cab door, wherein at least one functional part (18, 19) is installed, and the wing and the wheel arch (9) are at least partially integrated, in each body side module (7),
**in that** the preassembled body side module (7) is fitted so as to be fixed to the frame or fixed to the driver cab in order to complete the body (1),
**in that** the body side modules (7) are dimensioned and fitted in such a manner that they each laterally adjoin a front-side radiator (6), the radiator being dimensioned and fitted in such a manner that it extends downwards as far as an underride protector (20), wherein the radiator (6) and the underride protector (20) are fitted so as to be fixed to the frame.

2. Method according to Claim 1, **characterized in that** headlights (18) and/or headlight panels and/or wing inner panels and/or spray protection devices and/or entrances (19) and/or electric devices and/or tanks and/or air guides and/or connection mounts are installed and fitted and/or integrally formed as functional parts during the premanufacturing of the body side modules (7).

3. Method according to Claim 1 or 2, **characterized in that** the body side module (7) is produced with a stiff supporting structure (10) and an outer skin (11) on the outside of the vehicle, wherein, in the fitted state, the supporting structure (10) forms the in each case lower lateral body construction space with the connection fixed to the frame or fixed to the driver cab, and the functional parts (18, 19, 9) are accommodated and/or integrated in the supporting structure (10).

4. Method according to Claim 3, **characterized in that** the supporting structure is produced in the form of a lattice frame (10) with longitudinal frame parts (12), vertical frame parts (13) and transverse frame parts (14) and also with curved frame parts (15) in a front rounded corner region and curved frame parts (16) in the region around the respective wheel arch (9).

5. Method according to Claim 3 or 4, **characterized in that** the supporting structure, in particular the lattice frame (10), is produced from high-strength material, preferably diecast aluminium or fibre composite material.

6. Method according to one of Claims 3 to 5, **characterized in that** the outer skin (11) of the supporting structure, in particular of the lattice frame (10), is produced from plastic, preferably from thermoplastic, and is of single-part or multipart design.

7. Method according to one of Claims 1 to 6, **characterized in that** the driver cab (2) is designed so as to be able to be hinged about a transverse axis, wherein, in the case of body side modules fitted so as to be fixed to the driver cab, said body side modules are pivoted at the same time as the driver cab (2) is tilted, and, in the case of body side modules (7) fitted so as to be fixed to the frame, said body side modules remain fixed to the frame when the driver cab (2) is tilted.

8. Front end of a lorry with driver cab,
- with longitudinal members (17) and/or crossmembers of a chassis frame, which support an internal combustion engine with a radiator assigned on the front side and a wheel suspension with the front wheels, above which the body (1) with a driver cab (2) is arranged,
**characterized**
**in that** body side modules (7) on the right side and left side are completely premanufactured as components of the body (1), in the fitted state, extend from the front of the body (4) as far as the rear edge (5) of the driver cab (2) and form the lower region of the driver cab (2) with the outer skin (11) below the plane of a lower edge (8) of a driver cab door, wherein at least one functional part (18, 19) is installed, and the wing and the wheel arch (9) are at least partially integrated, in each body side module (7),
**in that** the preassembled body side module (7) is fitted so as to be fixed to the frame or fixed to the driver cab in order to complete the body (1),
**in that** the body side modules (7) are dimensioned and fitted in such a manner that they each laterally adjoin a front-side radiator (6), the radiator being dimensioned and fitted in such a manner that it extends downwards as far as an underride protector (20), wherein the radiator (6) and the underride protector (20) are fitted so as to be fixed to the frame.

9. Front end according to Claim 8, **characterized in that** headlights (18) and/or headlight panels and/or wing inner panels and/or spray protection devices and/or entrances (19) and/or electric devices and/or tanks and/or air guides and/or connection mounts are installed and fitted and/or integrally formed as functional parts during the premanufacturing of the body side modules (7).

10. Front end according to Claim 8 or 9, **characterized in that** the body side module (7) is produced with a stiff supporting structure (10) and an outer skin (11) on the outside of the vehicle, wherein, in the fitted state, the supporting structure (10) forms the in each case lower lateral body construction space with the connection fixed to the frame or fixed to the driver cab, and the functional parts (18, 19, 9) are accommodated and/or integrated in the supporting structure (10).

11. Front end according to Claim 10, **characterized in that** the supporting structure is produced in the form of a lattice frame (10) with longitudinal frame parts (12), vertical frame parts (13) and transverse frame parts (14) and also with curved frame parts (15) in a front rounded corner region and curved frame parts (16) in the region around the respective wheel arch (9).

12. Front end according to Claim 10 or 11, **characterized in that** the supporting structure, in particular the lattice frame (10), is produced from high-strength material, preferably diecast aluminium or fibre composite material.

13. Front end according to one of Claims 10 to 12, **characterized in that** the outer skin (11) of the supporting structure, in particular of the lattice frame (10), is produced from plastic, preferably from thermoplastic, and is of single-part or multipart design.

## Revendications

1. Procédé de montage d'une partie avant d'un camion doté d'une cabine de conducteur,
- avec des longerons (17) et/ou des traverses d'un cadre de châssis, qui portent un moteur à combustion interne avec un radiateur associé côté frontal ainsi qu'une suspension des roues avec les roues avant, au moyen desquels la carrosserie (1) est agencée avec une cabine de conducteur (2), **caractérisé en ce que**
- on pré-fabrique complètement des modules de carrosserie latéraux (7), du côté droit et du côté gauche, comme composants de la carrosserie (1), qui s'étendent à l'état monté depuis l'avant de la carrosserie (4) jusqu'au bord arrière (5) de la cabine de conducteur (2) et qui forment la région inférieure de la cabine de conducteur (2) avec la face extérieure (11) située en dessous du plan d'un bord inférieur (8) de la porte de la cabine de conducteur, dans lequel au moins une partie fonctionnelle (18, 19) est chaque fois incorporée et le garde-boue et le passage de roue (9) sont au moins en partie intégrés dans le module de carrosserie latéral (7),
- on monte le module de carrosserie latéral (7) pré-assemblé solidairement au cadre ou à la cabine de conducteur pour compléter la carrosserie (1),
- on dimensionne et on monte les modules de carrosserie latéraux (7) de telle manière qu'ils se raccordent chaque fois latéralement à un radiateur côté frontal (6), qui est dimensionné et monté de telle manière qu'il s'étende jusqu'à une barre anti-encastrement (20), dans lequel le radiateur (6) et la barre anti-encastrement (20) sont montés solidairement au cadre.

2. Procédé selon la revendication 1, **caractérisé en ce que** l'on incorpore et on monte et/ou on forme comme parties fonctionnelles lors de la préfabrication des modules de carrosserie latéraux (7) des projecteurs (18) et/ou des couvertures de projecteurs et/ou des garde-boue intérieurs et/ou des dispositifs anti-projections et/ou des marches d'accès (19) et/ou des équipements électriques et/ou des réservoirs et/ou des conduites d'air et/ou des supports d'attelage.

3. Procédé selon la revendication 1 ou 2, **caractérisé en ce que** l'on fabrique le module de carrosserie latéral (7) avec une structure portante rigide (10) et une face extérieure (11) du côté extérieur du véhicule, dans lequel la structure portante (10) forme à l'état monté l'espace de construction de carrosserie latéral respectivement inférieur avec la liaison solidaire du cadre ou solidaire de la cabine de conducteur et les parties fonctionnelles (18, 19, 9) sont logées et/ou intégrées dans la structure portante (10).

4. Procédé selon la revendication 3, **caractérisé en ce que** l'on fabrique la structure portante sous forme de cadre en treillis (10) avec des parties de cadre longitudinales (12), des parties de cadre verticales (13) et des parties de cadre transversales (14) ainsi qu'avec des parties de cadre courbes (15) dans une zone de coin arrondie avant ainsi qu'avec des parties de cadre courbes (16) dans la région entourant le passage de roue respectif (9).

5. Procédé selon la revendication 3 ou 4, **caractérisé en ce que** l'on fabrique la structure portante, en particulier le cadre en treillis (10), en un matériau à haute résistance, de préférence en aluminium moulé sous pression ou en matériau composite renforcé par des fibres.

6. Procédé selon l'une quelconque des revendications 3 à 5, **caractérisé en ce que** l'on fabrique la face extérieure (11) de la structure portante, en particulier du cadre en treillis (10), en matière plastique, de préférence en une matière plastique thermoplastique, et on la réalise en une seule pièce ou en plusieurs pièces.

7. Procédé selon l'une quelconque des revendications 1 à 6, **caractérisé en ce que** l'on réalise la cabine de conducteur (2) basculante autour d'un axe transversal, dans lequel, dans le cas où les modules de carrosserie latéraux sont solidaires de la cabine de conducteur, ceux-ci pivotent également lors du basculement de la cabine de conducteur (2) et, dans le cas où les modules de carrosserie latéraux (7) sont solidaires du cadre, ceux-ci restent solidaires du cadre lors du basculement de la cabine de conducteur (2).

8. Partie avant d'un camion doté d'une cabine de conducteur,
- avec des longerons (17) et/ou des traverses d'un cadre de châssis, qui portent un moteur à combustion interne avec un radiateur associé côté frontal ainsi qu'une suspension des roues avec les roues avant, au moyen desquels la carrosserie (1) est agencée avec une cabine de conducteur (2),
**caractérisée en ce que**
- des modules de carrosserie latéraux (7), du côté droit et du côté gauche, sont complètement préfabriqués comme composants de la carrosserie (1), s'étendent à l'état monté depuis l'avant de la carrosserie (4) jusqu'au bord arrière (5) de la cabine de conducteur (2) et forment la région inférieure de la cabine de conducteur (2) avec la face extérieure (11) située en dessous du plan d'un bord inférieur (8) de la porte de la cabine de conducteur, dans lequel au moins une partie fonctionnelle (18, 19) est chaque fois incorporée et le garde-boue et le passage de roue (9) sont au moins en partie intégrés dans le module de carrosserie latéral (7),
- le module de carrosserie latéral (7) pré-assemblé est monté solidairement au cadre ou à la cabine de conducteur pour compléter la carrosserie (1),
- les modules de carrosserie latéraux (7) sont dimensionnés et montés de telle manière qu'ils se raccordent chaque fois latéralement à un radiateur côté frontal (6), qui est dimensionné et monté de telle manière qu'il s'étende jusqu'à une barre anti-encastrement (20), dans lequel le radiateur (6) et la barre anti-encastrement (20) sont montés solidairement au cadre.

9. Partie avant selon la revendication 8, **caractérisée en ce que** des projecteurs (18) et/ou des couvertures de projecteurs et/ou des garde-boue intérieurs et/ou des dispositifs anti-projections et/ou des marches d'accès (19) et/ou des équipements électriques et/ou des réservoirs et/ou des conduites d'air et/ou des supports d'attelage sont incorporés et montés et/ou formés comme parties fonctionnelles lors de la préfabrication des modules de carrosserie latéraux (7).

10. Partie avant selon la revendication 8 ou 9, **caractérisée en ce que** le module de carrosserie latéral (7) est fabriqué avec une structure portante rigide (10) et une face extérieure (11) du côté extérieur du véhicule, dans lequel la structure portante (10) forme à l'état monté l'espace de construction de carrosserie latéral respectivement inférieur avec la liaison solidaire du cadre ou de la cabine de conducteur et les parties fonctionnelles (18, 19, 9) sont logées et/ou intégrées dans la structure portante (10).

11. Partie avant selon la revendication 10, **caractérisée en ce que** la structure portante est fabriquée sous forme de cadre en treillis (10) avec des parties de cadre longitudinales (12), des parties de cadre verticales (13) et des parties de cadre transversales (14) ainsi qu'avec des parties de cadre courbes (15) dans une zone de coin arrondie avant ainsi qu'avec des parties de cadre courbes (16) dans la région entourant le passage de roue respectif (9).

12. Partie avant selon la revendication 10 ou 11, **caractérisée en ce que** la structure portante, en particulier le cadre en treillis (10), est fabriquée en un matériau à haute résistance, de préférence en aluminium moulé sous pression ou en matériau composite renforcé par des fibres.

13. Partie avant selon l'une quelconque des revendications 10 à 12, **caractérisée en ce que** la face extérieure (11) de la structure portante, en particulier du cadre en treillis (10), est fabriquée en matière plastique, de préférence en une matière plastique thermoplastique, et est réalisée en une seule pièce ou en plusieurs pièces.
